# EUROPEAN PATENT APPLICATION

(11) **EP 2 583 917 A1**
(43) Date of publication of application: **24.04.2013**
(21) Application number: 11185938.5
(22) Date of filing: 20.10.2011
(51) Int. Cl.: B65G 37/00, B65G 39/02, B65G 39/04

(54) **Substrate transmission apparatus**

(71) Applicant: Gintech Energy Corporation, Jhunan Township, Miaoli County 350 (TW)
(72) Inventor: Liu, Kuo-Chung, 350 Miaoli County (TW); Lee, Chih-Chung, 350 Miaoli County (TW); Chien, Peng-Sheng, 350 Miaoli County (TW)
(74) Representative: Granleese, Rhian Jane

(57) **Abstract**

A substrate transmission apparatus (200) is provided. The substrate transmission apparatus includes two supporting stands (210), a transmission shaft (220) having two end portions (224), a supporting shaft (230) having two end portions (236), first rollers (240), and second rollers (250). Two end portions of the transmission shaft are respectively connected to the two supporting stands. Two end portions of the supporting shaft are respectively connected to the two supporting stands, and the supporting shaft is located above the transmission shaft. The first rollers are fixed at intervals on the transmission shaft and rotate with the transmission shaft to convey a substrate placed thereon. The second rollers are rotatably connected to the supporting shaft and are in contact with an upper surface of the substrate, such that the substrate is conveyed and sandwiched between the first rollers and the second rollers.

## Description

### BACKGROUND

### Technical Field

The present disclosure relates to a substrate transmission apparatus.

### Description of Related Art

In recent years, due to the intense competition in manufacturing industries, manufacturers that are able to produce more products in a limited time have better market competitiveness. Therefore, the importance of automatic equipment grows with each passing day.

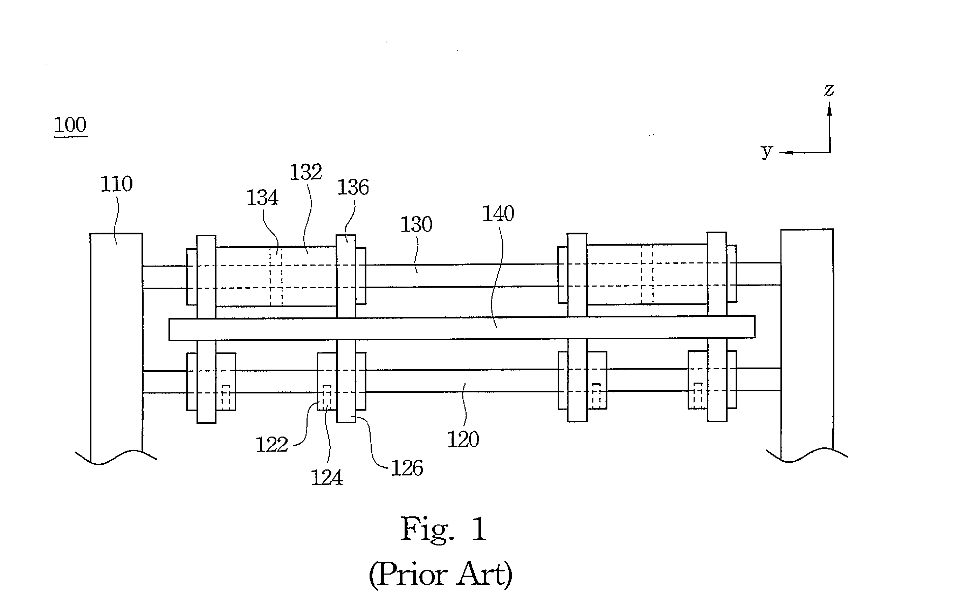

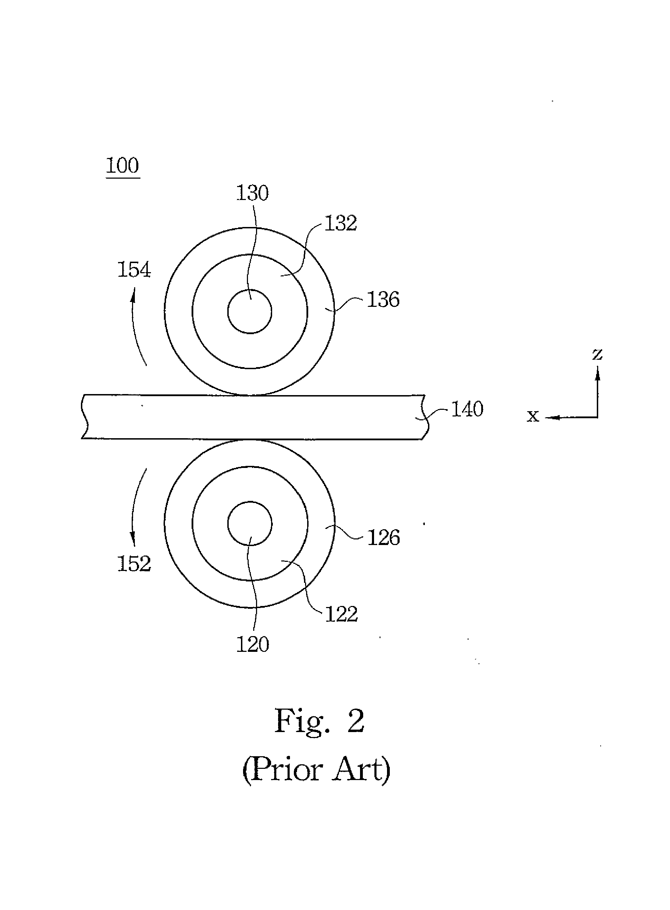

FIG. 1 is a front view of a conventional substrate transmission apparatus 100 shown in a state conveying a substrate 140. FIG. 2 is a side view of the substrate transmission apparatus 100 shown in FIG. 1. As shown in FIG. 1 and FIG. 2, the substrate transmission apparatus 100 includes supporting stands 110, a lower transmission shaft 120, an upper transmission shaft 130, lower rollers 122, and upper rollers 132. The supporting stands 110 enable the lower transmission shaft 120 and the upper transmission shaft 130 to rotate. The lower rollers 122 are fixed on the lower transmission shaft 120 by bolts 124, respectively. Each of the upper rollers 132 is cylindrical in shape, and is penetrated by a bolt 134 and fixed on the upper transmission shaft 130. Therefore, the lower rollers 122 rotate with the lower transmission shaft 120, and the upper rollers 132 rotate with the upper transmission shaft 130. Rubber O-rings 136 are sleeved on the upper rollers 132, and rubber O-rings 126 are sleeved on the lower rollers 122. When the substrate transmission apparatus 100 conveys the substrate 140 in a direction x, the supporting stands 110 may control the lower transmission shaft 120 to rotate in a direction 152 and control the upper transmission shaft 130 to rotate in a direction 154, such that the substrate 140 is conveyed by the rubber O-rings 136 and the rubber O-rings 126. The upper rollers 132 may press down on the substrate 140 to prevent the same from being displaced upward in a direction z.

However, if the upper transmission shaft 130 deforms as a result of being structurally weakened after long use, the upper transmission shaft 130 may no longer rotate in a straight line. Since the bolts 134 of the upper rollers 132 are fixed on the upper transmission shaft 130 and the rubber O-rings 136 are sleeved on the upper rollers 132, the rubber O-rings 136 of the upper rollers 132 are unevenly in contact with the substrate 140 due to the deformation of the upper transmission shaft 130. Because the upper rollers 132 and the lower rollers 122 rotate with the upper transmission shaft 130 and the lower transmission shaft 120, respectively, the upper rollers 132 and the lower rollers 122 are active rollers that exert active forces. Therefore, the substrate 140 receives the resulting shearing force generated by the upper rollers 132 in a direction y, such that cracks may form on the substrate 140.

### SUMMARY

An aspect of the present invention is to provide a substrate transmission apparatus.

In an embodiment of the present invention, a substrate transmission apparatus includes two supporting stands, a transmission shaft having two end portions, a supporting shaft having two end portions, first rollers, and second rollers. Two end portions of the transmission shaft are respectively connected to the two supporting stands. Two end portions of the supporting shaft are respectively connected to the two supporting stands, and the supporting shaft is located above the transmission shaft. The first rollers are fixed at intervals on the transmission shaft and rotate with the transmission shaft to convey a substrate placed thereon. The second rollers are rotatably connected to the supporting shaft and are in contact with an upper surface of the substrate, such that the substrate is conveyed and sandwiched between the first rollers and the second rollers.

In an embodiment of the present invention, the supporting shaft includes grooves.

In an embodiment of the present invention, the substrate transmission apparatus further includes C-cfamps respectively clamped on the grooves for positioning the second rollers, such that each of the second rollers is rotated between a pair of the C-clamps by the substrate.

In an embodiment of the present invention, one of the supporting stands includes a motor for rotating the transmission shaft.

In an embodiment of the present invention, the substrate transmission apparatus further includes fixing elements respectively penetrating through the first rollers and being in contact with the transmission shaft, and the transmission shaft includes concave regions respectively coupled to the fixing elements.

In an embodiment of the present invention, each of the first rollers includes a first trench.

In an embodiment of the present invention, each of the first rollers further includes a first rubber O-ring disposed on the first trench.

In an embodiment of the present invention, each of two end portions of each of the second rollers includes a second trench.

In an embodiment of the present invention, each of the second rollers includes two second rubber O-rings respectively disposed on the second trenches.

In an embodiment of the present invention, each of the supporting stands includes a bearing coupled to one of the end portions of the transmission shaft.

In the aforementioned embodiment of the present invention, because the substrate is sandwiched between the first rollers and the second rollers, and the first rollers are fixed on the transmission shaft by the fixing elements, when the motor of the supporting stand rotates the transmission shaft, the first rollers rotate with the transmission shaft and convey the substrate. When the first rollers convey the substrate, the second rollers are rotated between the C-clamps by the substrate. With such a design, the second rollers do not exert an active force, that is, the second rollers are passive rollers rotated by the substrate. The second rollers prevent the substrate from being displaced upwardly and do not easily generate a shearing force perpendicular to the moving direction of the substrate, such that cracks are not easily formed on the substrate. In another aspect, because each of the second rollers does not include any fixing element in contact with the supporting shaft and is only positioned by the C-clamps located adjacent to two sides thereof, the second rollers do not easily generate a shearing force perpendicular to the moving direction of the substrate which may be generated in the event that the supporting shaft deforms. As a result, the lifespan of the supporting shaft can be extended.

### BRIEF DESCRIPTION OF THE DRAWINGS

FIG. 1 is a front view of a conventional substrate transmission apparatus shown in a state conveying a substrate;
FIG. 2 is a side view of the substrate transmission apparatus shown in FIG. 1;
FIG. 3 is a front view of a substrate transmission apparatus of an embodiment of the present invention, in which the substrate transmission apparatus is shown in a state conveying a substrate;
FIG. 4 is a perspective view of a supporting shaft and a second roller shown in FIG. 3;
FIG. 5 is an exploded view of the supporting shaft and the second roller shown in FIG. 4; and
FIG. 6 is a side view of the substrate transmission apparatus shown in FIG. 3.

### DETAILED DESCRIPTION

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawings.

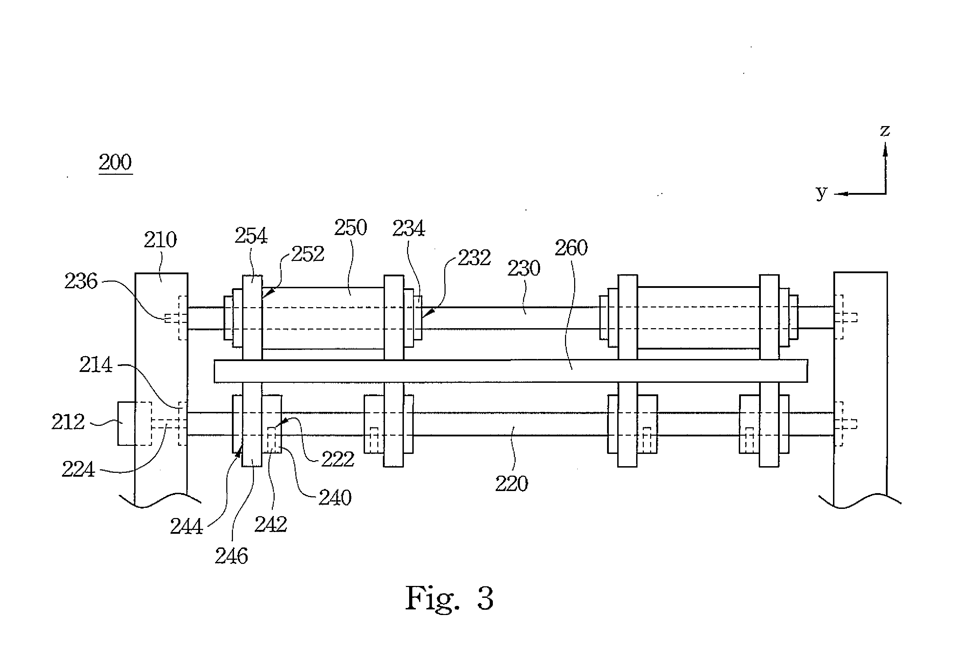

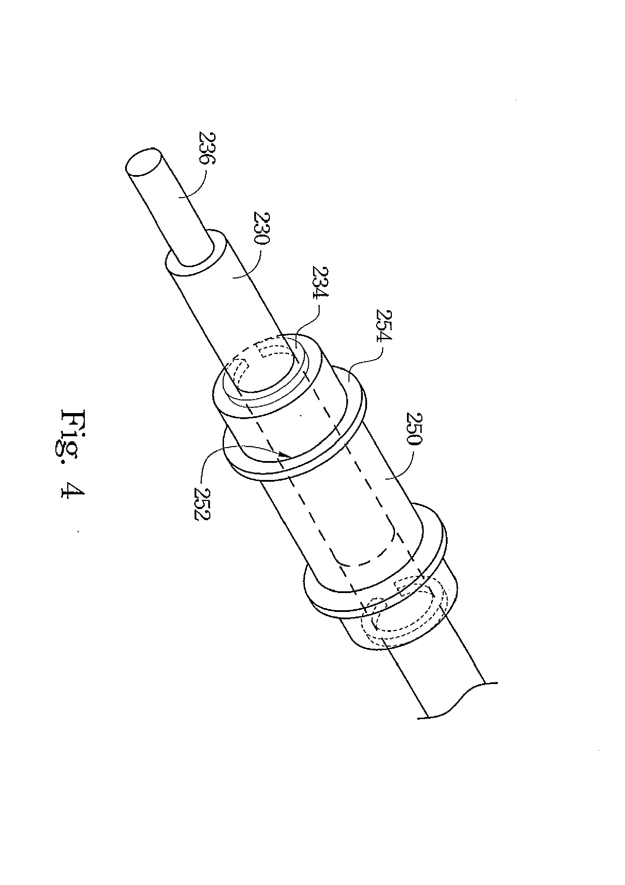

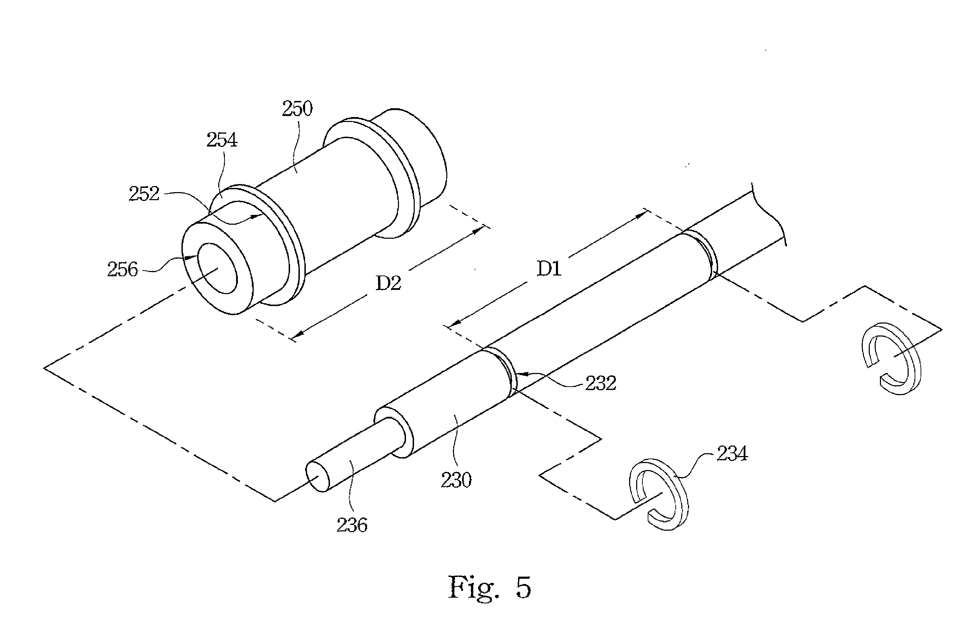

FIG. 3 is a front view of a substrate transmission apparatus 200 of an embodiment of the present invention, in which the substrate transmission apparatus 200 is shown in a state conveying a substrate 260. FIG. 4 is a perspective view of a supporting shaft 230 and a second roller 250 shown in FIG. 3. FIG. 5 is an exploded view of the supporting shaft 230 and the second roller 250 shown in FIG. 4. As shown in FIG. 3, FIG. 4, and FIG. 5, the substrate transmission apparatus 200 includes two supporting stands 210, a transmission shaft 220 having two end portions 224, the supporting shaft 230 having two end portions 236, first rollers 240, second rollers 250 (one of which is shown in FIG. 4 described above), and C-clamps 234. The two end portions 224 of the transmission shaft 220 are respectively connected to the two supporting stands 210, and the transmission shaft 220 rotates between the supporting stands 210.

The two end portions 236 of the supporting shaft 230 are also respectively connected to the two supporting stands 210. The supporting shaft 230 includes grooves 232 and is located above the transmission shaft 220. The supporting shaft 230 extends through a through hole 256 of the second roller 250. The first rollers 240 are fixed at intervals on the transmission shaft 220 and rotate with the transmission shaft 220 to convey the substrate 260 placed on the first rollers 240.

The second rollers 250 are rotatably connected to the supporting shaft 230 and are in contact with the upper surface of the substrate 260, such that the substrate 260 is conveyed and sandwiched between the first rollers 240 and the second rollers 250.

The C-clamps 234 are clamped on the grooves 232 to position the second rollers 250. That is, one of the second rollers 250 is positioned on the supporting shaft 230 between a pair of the C-clamps 234. When the first rollers 240 convey the substrate 260, the substrate 260 rotates the second rollers 250 between the C-clamps 234 by the friction force between the substrate 260 and the second rollers 250. Furthermore, a distance D1 between each pair of the C-clamps 234 is slightly larger than a distance D2 of the length of each of the second rollers 250. As an example, the difference between the distance D1 and the distance D2 is about 0.5mm.

In this embodiment, one of the supporting stands 210 includes a motor 212. The motor 212 may be connected to one of the end portions 224 of the transmission shaft 220 by couplings to rotate the transmission shaft 220. The supporting stand 210 further includes a bearing 214 coupled to the end portion 224 of the transmission shaft 220. Fixing elements 242 respectively penetrate the first rollers 240 and are in contact with the transmission shaft 220, and the transmission shaft 220 includes concave regions 222 respectively coupled to the fixing elements 242, such that the first rollers 240 may rotate with the transmission shaft 220.

In addition, each of the first rollers 240 includes a first trench 244 and a first rubber O-ring 246 placed on the first trench 244, such that the first rubber O-rings 246 are in contact with the lower surface of the substrate 260. Each of two end portions of each of the second rollers 250 includes a second trench 252, and each of the second rollers 250 includes two second rubber O-rings 254 respectively placed on the second trenches 252, such that the second rubber O-rings 254 are in contact with the upper surface of the substrate 260. Accordingly, the first rubber O-rings 246 and the second rubber O-rings 254 not only increase the friction force between the substrate 260 and the first and second rollers 240, 250, but also prevent the substrate 260 from being damaged by the first rollers 240 and the second rollers 250.

When the substrate transmission apparatus 200 conveys the substrate 260, the motor 212 located in the supporting stand 210 rotates the transmission shaft 220, such that the first rollers 240 fixed on the transmission shaft 220 rotate with the transmission shaft 220. Because the first rubber O-rings 246 placed on the first trenches 244 of the first rollers 240 are in contact with the lower surface of the substrate 260, the first rubber O-rings 246 convey the substrate 260, aided by the friction force created between the first rubber O-rings 246 and the substrate 260. When the first rollers 240 convey the substrate 260, the second rollers 250 are rotated between the C-clamps 234 by the friction force between the upper surface of the substrate 260 and the second rubber O-rings 254.

Therefore, the second rollers 250 do not exert an active force to convey the substrate 260 and are passive rollers rotated by the substrate 260. The second rollers 250 function only to prevent the substrate 260 from being displaced in a direction z and do not easily generate a shearing force in a direction y, such that cracks are not easily formed on the substrate 260. Moreover, each of the second rollers 250 does not include any fixing element in contact with the supporting shaft 230 and is only positioned by the C-clamps 234 located adjacent to opposite sides thereof. Thus, the second rollers 250 do not easily generate a shearing force in the direction y which may be generated in the event the supporting shaft 230 deforms, such that the lifespan of the supporting shaft 230 may be extended.

In another aspect, because the second rollers 250 do not exert an active force and are passive rollers rotated by the substrate 260, the supporting shaft 230 may be fixedly or rotatably connected to the supporting stands 210. For example, the supporting shaft 230 may be adhered or screwed to the supporting stands 210 or coupled to bearings located in the supporting stands 210. That is to say, the manner in which the supporting shaft 230 is connected to the supporting stands 210 is not limited in the substrate transmission apparatus 200 of the embodiment of the present invention, as long as the second rollers 250 positioned on the supporting shaft 230 can be rotated by the substrate 260.

The aforementioned substrate transmission apparatus 200 may be an etching apparatus for a solar cell. The material of the first roller 240 may include carbon fiber covered with chemically resistant coatings, and the coatings may be formed of or include polyvinylidene fluoride (PVDF) or polyethylene (PE). The material of the transmission shaft 220 and the supporting shaft 230 may include polyvinyl chloride (PVC). The substrate 260 may be a silicon wafer. The material of the C-clamp 234 may include polypropylene (PP) with acid resistance and alkali resistance. The fixing element 242 may include a screw or a bolt. The supporting stand 210 may include a gear set.

It is to be noted that much of the information described in the above embodiments will not be repeated in the following description.

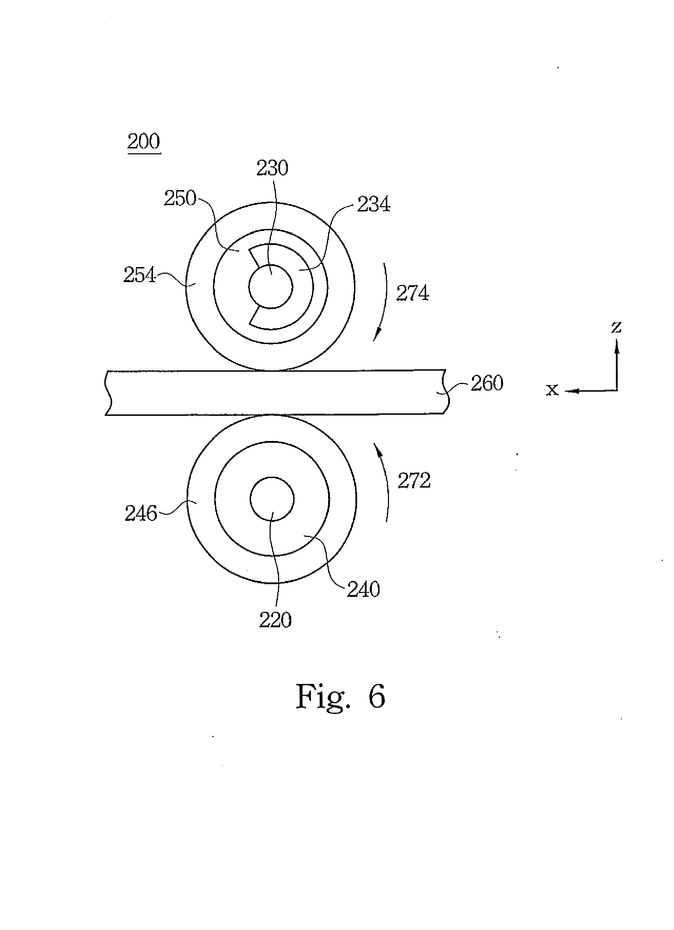

FIG. 6 is a side view of the substrate transmission apparatus 200 shown in FIG. 3. To simplify the description to follow, it will be assumed that there is a single first roller 240 and a single second roller 250. As shown in FIG. 3 and FIG. 6, when it is desired for the substrate transmission apparatus 200 to convey the substrate 260 in the direction x, the motor 212 of the supporting stand 210 can be set to rotate the transmission shaft 220 in a direction 272. Because the first roller 240 is fixed on the transmission shaft 220, the first roller 240 rotates with the transmission shaft 220 in the direction 272. At this time, the first rubber O-ring 246 placed on the first roller 240 conveys the substrate 260 in the direction x. Since the substrate 260 conveyed in the direction x is in contact with the second rubber O-ring 254 placed on the second roller 250, the second roller 250 is rotated in a direction 274 by the friction force generated between the second rubber O-ring 254 and the substrate 260. Accordingly, the second roller 250 functions only to prevent the substrate 260 from being displaced in the direction z, and the second roller 250 does not easily generate a shearing force in the direction y.

Compared with the conventional substrate transmission apparatus shown in FIG. 1, the second rollers of the substrate transmission apparatus of the embodiment of the present invention do not exert an active force, such that the second rollers are passive rollers rotated by the substrate. Thus, the second rollers function only to prevent the substrate from being displaced upward and do not easily generate a shearing force perpendicular to the moving direction of the substrate, such that cracks are not easily formed on the substrate. Furthermore, because each of the second rollers does not include any fixing elements in contact with the supporting shaft and is only positioned by the C-clamps located adjacent to opposite sides thereof, the second rollers do not easily generate a shearing force perpendicular to the moving direction of the substrate which may be generated in the event that the supporting shaft deforms, such that the lifespan of the supporting shaft can be extended.

The reader's attention is directed to all papers and documents which are filed concurrently with this specification and which are open to public inspection with this specification, and the contents of all such papers and documents are incorporated herein by reference.

All the features disclosed in this specification (including any accompanying claims, abstract, and drawings) may be replaced by alternative features serving the same, equivalent or similar purpose, unless expressly stated otherwise. Thus, unless expressly stated otherwise, each feature disclosed is one example only of a generic series of equivalent or similar features.

## Claims

1. A substrate transmission apparatus comprising:
two supporting stands;
a transmission shaft having two end portions respectively connected to the two supporting stands, such that the transmission shaft rotates between the supporting stands;
a supporting shaft having two end portions respectively connected to the two supporting stands, and the supporting shaft located above the transmission shaft;
a plurality of first rollers fixed at intervals on the transmission shaft and rotating with the transmission shaft for conveying a substrate placed thereon; and
a plurality of second rollers rotatably connected to the supporting shaft and being in contact with an upper surface of the substrate, such that the substrate is conveyed and sandwiched between the first rollers and the second rollers.

2. The substrate transmission apparatus as claimed in claim 1, wherein the supporting shaft comprises a plurality of grooves.

3. The substrate transmission apparatus as claimed in claim 2 further comprising:
a plurality of C-clamps respectively clamped on the grooves for positioning the second rollers, wherein each of the second rollers is rotated between a pair of the C-clamps by the substrate.

4. The substrate transmission apparatus according to any preceding claim, wherein one of the supporting stands comprises a motor for rotating the transmission shaft.

5. The substrate transmission apparatus according to any preceding claim, further comprising a plurality of fixing elements respectively penetrating the first rollers and being in contact with the transmission shaft, wherein the transmission shaft comprises a plurality of concave regions respectively coupled to the fixing elements.

6. The substrate transmission apparatus according to any preceding claim, wherein each of the first rollers comprises a first trench.

7. The substrate transmission apparatus as claimed in claim 6, wherein each of the first rollers further comprises a first rubber O-ring disposed on the first trench.

8. The substrate transmission apparatus according to any preceding claim, wherein each of two end portions of each of the second rollers comprises a second trench.

9. The substrate transmission apparatus as claimed in claim 8, wherein each of the second rollers comprises two second rubber O-rings respectively disposed on the second trenches.

10. The substrate transmission apparatus according to any preceding claim, wherein each of the supporting stands comprises a bearing coupled to one of the end portions of the transmission shaft.
